(19) Europäisches Patentamt / European Patent Office / Office européen des brevets

(11) **EP 2 884 126 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(51) Int Cl.:
*F16C 33/36* *(2006.01)*  *F16C 33/58* *(2006.01)*
*F16C 19/22* *(2006.01)*

(21) Anmeldenummer: **14197442.8**

(22) Anmeldetag: **11.12.2014**

(54) **Laufbahnelement und Rollenlager mit dem Laufbahnelement**

Track element and roller bearing comprising a track element

Élément de voie de roulement et palier à rouleaux équipé de l'élément de voie de roulement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2013 DE 102013225859**

(43) Veröffentlichungstag der Anmeldung:
**17.06.2015 Patentblatt 2015/25**

(73) Patentinhaber: **Aktiebolaget SKF**
**415 50 Göteborg (SE)**

(72) Erfinder: **Roessner, Sonja**
**97516 Oberschwarzach (DE)**

(74) Vertreter: **Kuhstrebe, Jochen**
**SKF GmbH**
**Gunnar-Wester-Straße 12**
**97421 Schweinfurt (DE)**

(56) Entgegenhaltungen:
**EP-A1- 2 383 478 DE-A1-102005 061 102**
**DE-A1-102008 020 068 JP-A- 2003 120 687**

EP 2 884 126 B1

**Beschreibung**

Die Erfindung betrifft ein Laufbahnelement und ein Rollenlager mit dem Laufbahnelement.

Aus dem Stand der Technik ist eine Reihe von Rollenlagern, insbesondere Zylinder- und Kegelrollenlager bekannt, bei denen wenigstens eines der Abrollflächenelemente für die Rollen mit wenigstens einem so genannten Bord ausgebildet ist, an dem wenigstens ein äußerer ringartiger Bereich wenigstens einer Stirnseite der Rollen auch bei bestimmungsgemäßem Betrieb des Rollenlagers zum Anlaufen vorgesehen ist. Dieser Bereich kann auch als ein so genannter Stirnseitenverblendungsbereich speziell ausgebildet sein, an dem sich nach radial außen hin der so genannte Kantenkürzungsbereich und nach radial innen hin die übrige Stirnseite der Rolle anschließt, wobei die übrige Stirnseite im Wesentlichen plan, mit oder ohne Vertiefung (Dimpel) ausgebildet sein kann.

In der DE 10 2005 061 102 A1 ist ein Wälzlager mit Wälzkörpern offenbart, wobei das Wälzlager einen Bord mit einer Bordlauffläche aufweist. Die Ausgestaltung der Bordlauffläche ist torusförmig gekrümmt.

In der JP 2003-120687A ist ein Kegelrollenlager offenbart, bei dem der Innenring eine Anlauffläche für die Kegelrollen aufweist. Die Anlauffläche weist eine konvexe Form mit einem Radius R auf.

In der DE 10 2008 020 068 A1 ist ein Wälzlager mit einem Bord offenbart, der eine Führungsfläche aufweist. Der Mittelbereich dieser Führungsfläche wird durch einen Kreisbogen gebildet, während im Bereich einer Kontaktzone der Kreisbogen durch einen logarithmischen Graphen überlagert wird. Durch die Überlagerung des Kreisbogen mit dem logarithmischen Profil in zunehmendem Abstand von der Laufbahn, wird die zunächst konstante Krümmung des Kreisbogens im Bereich der Kontaktzone verringert, wodurch die Anlauffläche zunehmend vom Kreisbogen abweicht.

Eine Aufgabe der vorliegenden Erfindung ist es dabei, ein Laufbahnelement mit verbesserten Führungseigenschaften zu schaffen und ein entsprechendes Rollenlager anzugeben.

Die Aufgabe wird durch den Gegenstand des Hauptanspruchs bzw. des nebengeordneten Anspruchs gelöst. Vorteilhafte Ausgestaltungen sind Gegenstand der abhängigen Unteransprüche.

Gemäß Hauptanspruch wird ein Laufbahnelement für ein Rollenlager angegeben, wobei das Laufbahnelement wenigstens eine im Wesentlichen radial verlaufende Anlauffläche für Rollen des Rollenlagers aufweist, wobei wenigstens ein Abschnitt der Anlauffläche gemäß einer Kurve ausgebildet ist, wobei sich die Krümmung der Kurve kontinuierlich ändert und mit zunehmendem Abstand von einer Laufbahn des Laufbahnelements kontinuierlich ansteigt. Der Abschnitt beginnt unmittelbar im Anschluss an einen radialen Hinterstich des Laufbahnelements. In diesem Fall wird insbesondere bei geringer Kantenkürzung der zu führenden Rolle sichergestellt, dass die Rolle stets durch den gekrümmten Abschnitt geführt wird. Der Abschnitt setzt dabei bevorzugt bezüglich der radialen Richtung auf Höhe der Laufbahn des Laufbahnelements an. Vorzugsweise verläuft die Änderung der Krümmung stetig, besonders bevorzugt differenzierbar. Der Abschnitt der Anlauffläche liegt in einem Bereich der Anlauffläche, an dem die Rollen geführt werden. Durch die auf den jeweiligen Lagertyp abstimmbare Krümmungsänderung lassen sich die Eigenschaften der Anlauffläche optimieren. Durch die optimierte Form des Abschnitts der Anlauffläche weist das Laufbahnelement eine verringerte Reibung und eine verbesserte Rollenführung auf. So kommt es beispielsweise bei einer Schiefstellung der Rollen (Schränken oder Kippen) im Betrieb des Rollenlagers zu einem Rückstellmoment auf die Rollen durch die Ausbildung der Anlauffläche und insbesondere des Abschnitts, so dass die Schiefstellung vermindert wird. Zudem wird das Anlaufen der Rolle an der Oberkante der Bordgleitbahn ("Kantenläufer") verhindert, ebenso sinkt das Risiko des "Fressens" der Rollen an der Anlauffläche.

Vorzugsweise steigt die Krümmung $\kappa_i$ der Kurve von einem Minimalwert $\kappa_{start}$ kontinuierlich auf einen Maximalwert $\kappa_{end}$ an. Dabei ist $\kappa_i = 1/R_i$, wobei $R_i$ dem lokalen Radius der Kurve entspricht. Dies ist beispielsweise bei Zylinderrollenlagern oder Kegelrollenlagern vorteilhaft, da die Rollen effektiv geführt werden können.

Die Krümmung des Abschnitts steigt mit zunehmendem Abstand von einer Laufbahn des Laufbahnelements stärker an. Folglich steigt die Krümmung nahe der Laufbahn zunächst weniger stark an als im von der Laufbahn entfernten Bereich. Je ausgeprägter der Schränkbzw. Kippzustand der zu führenden Rolle ist, desto weiter entfernt von der Laufbahn liegt auch deren Berührungspunkt mit der Anlauffläche. Folglich berührt beispielsweise die stärker gekippte Rolle einen stärker gekrümmten Bereich des Abschnitts als die weniger stark gekippte Rolle. Entsprechend erfährt die Rolle ein unterschiedliches Rückstellmoment je nach Lage des Berührungspunkts.

Alternativ ist es möglich und aus fertigungstechnischen Gründen üblich, einen radial und axial ausgedehnten Hinterstich am Laufbahnelement vorzusehen. In diesem Fall dehnt sich der Hinterstich in radialer Richtung über die Laufbahn hinaus aus, so dass der gekrümmte Abschnitt nicht auf Höhe der Laufbahn ansetzen kann, sondern erst am Ende des Einstichs in einer Höhe $h_{UCa}$ über der Laufbahn. Diese Höhe sollte maximal der Kantenkürzung der zu führenden Rolle entsprechen, damit die Rolle stets durch den gekrümmten Abschnitt geführt wird. Idealerweise wird die Höhe so gering wie möglich gewählt.

In einer Ausführungsform der Erfindung weist die Anlauffläche zwischen dem gekrümmten Abschnitt und dem Einstich des Laufbahnelements einen linear verlaufenden Abschnitt auf. Dies kann aus fertigungstechnischen Gründen bevorzugt sein. In diesem Fall ergibt sich im Bereich des linearen Abschnitts bereits eine gute Führung der Rolle, im Bereich des gekrümmten Abschnitts, also insbesondere bei Kipp- oder Schränkneigung der Rolle die optimierte Führung der Rolle.

In einer bevorzugten Ausführungsform der Erfindung folgt der gekrümmte Abschnitt einem Verlauf mit

$$y(x) = -\gamma \cdot x - y_2 \cdot \left(\frac{x}{h_{eff}}\right)^m,$$

wobei $\gamma$ und $m$ Konstanten sind und $x$ der Abstand vom Startpunkt des Abschnitts ist. Der Abschnitt kann auch als Profil bezeichnet werden. Bevorzugt liegt $m$ zwischen 3 und 8 und $\gamma$ zwischen 0 und 3 mrad. Die Konstante $y_2$ ergibt sich aus $y_2 = y_1 - \gamma h_{eff}$. Die Konstante $y_1$ liegt bevorzugt zwischen $0{,}003 \cdot h_{eff}$ und $0{,}02 \cdot h_{eff}$. Dabei bezeichnet $h_{eff}$ die effektive Bordhöhe, die sich aus der Differenz der Bordhöhe ab der Laufbahn $h_F$ und der Einstichhöhe $h_{UCa}$ ergibt. Es gilt also:

$$h_{eff} = h_F - h_{UCa}.$$

In einer bevorzugten Ausführungsform der Erfindung wurde die Anlauffläche im gehärteten Zustand des aus einem Stahl bestehenden Laufbahnelements durch einen spanabhebenden Prozess erzeugt. Dieses sogenannte "Hartdrehen" ist an sich bekannt und kann insbesondere durch das Härten auftretende Verzüge nachträglich ausgleichen. Dies ist insbesondere bei dem optimierten Abschnitt der Anlauffläche von Vorteil, dessen Verlauf mit hoher Genauigkeit gefertigt werden muss, um die verbesserten Führungseigenschaften zu maximieren.

Gemäß dem nebengeordneten Patentanspruch wird ein Rollenlager angegeben, dass wenigstens ein Laufbahnelement nach den vorangegangenen Patentansprüchen umfasst. Das entsprechende Rollenlager profitiert von den vorteilhaften Eigenschaften der Anlauffläche in Bezug auf die auftretenden Kontaktspannungen und der erhöhten Belastbarkeit. Das Rollenlager zeichnet sich insbesondere durch eine verbesserte Rollenführung bei gleichzeitig verringertem Reibmoment im Vergleich zu bekannten Rollenlagern aus. Die axiale Tragfähigkeit ist aufgrund verminderter Reibung und Wärmeentwicklung weiter erhöht.

In einer bevorzugten Ausführungsform der Erfindung umfasst das Rollenlager Rollen, bei denen wenigstens ein sich in einem vorgebbaren Abstand von der Rollenmittenachse bis hin zu einem Kantenkürzungsbereich erstreckender Anlaufabschnitt einer Stirnseite der Rolle gemäß einer gekrümmten Kurve ausgebildet ist, die entsprechend dem Verlauf $h$ in axialer Richtung verlaufend ausgebildet ist, wobei

$$h(z) = h_1 \left(\frac{z}{L_{eff}}\right)^{K_1}$$

ist und wobei $z$ der radiale Abstand von der Rollenmittenachse ist, $h_1$ eine Konstante (Randabfall/Verblendung) in axialer Richtung, $L_{eff}$ der effektive Stirnseitenradius der Rolle, bevorzugt mit

$$L_{eff} = 0{,}5 \cdot D_w - r_w,$$

sowie $K_1$ Konstante, die den Verlauf des gekrümmten Bereichs beschreiben sind. $D_w$ bezeichnet den Rollendurchmesser und $r_w$ die Kantenkürzung der Rolle in radialer Richtung

Die entsprechende Rolle weist einen optimierten Verlauf der Stirnseite im Anlaufabschnitt auf, sodass eine gute Rollenführung insbesondere in Verbindung mit der bereits beschriebenen Anlauffläche des Bords gewährleistet ist.

In einer vorteilhaften Ausgestaltung der Rolle liegen die Werte für $h_1$ im Bereich von 0,015% bis 0,05% des Rollendurchmessers $D_w$. Vorteilhaft liegt die dimensionslose Konstante $K_1$ im Bereich von 10 bis 50. Bei entsprechender Wahl der Werte und Konstanten in den angegebenen Bereichen weist die Rolle ein besonders optimiertes Stirnseitenprofil auf, so dass die Kontaktspannung minimiert und die Führung der Rolle optimiert ist.

Weitere Vorteile und Ausgestaltungen der Erfindung ergeben sich aus dem nachfolgend beschriebenen Ausführungsbeispiel im Zusammenhang mit den beigefügten Figuren. Es zeigen:

Figur 1    eine schematische Darstellung eines Rollenlagers gemäß einem Ausführungsbeispiel der Erfindung,

Figur 2    eine schematische Darstellung einer bekannten Bordgeometrie,

Figur 3    eine schematische Ansicht einer bekannten Zylinderrolle in einem Rollenlager,

Figuren 4 und 5    eine schematische Darstellung einer Bordgeometrie nach verschiedenen Ausführungsbeispielen der Erfindung,

Figur 6    ein bevorzugter Profilverlauf des Bords,

Figur 7    eine Darstellung einer Zylinderrolle gemäß einer Ausführungsform der Erfindung,

Figur 8      eine schematische Darstellung einer Rolle gemäß einer Ausführungsform der Erfindung und

Figur 9      verschiedene Profilverläufe einer Rolle aus Figur 8.

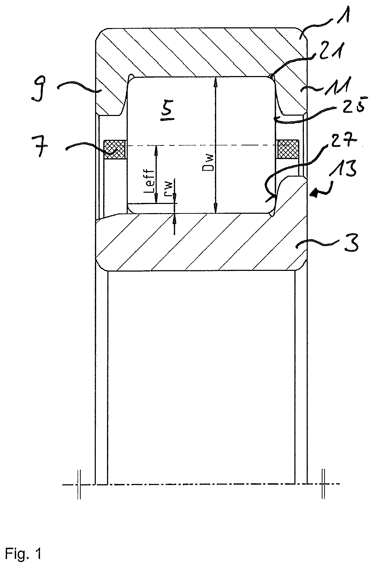

In die Figur 1 ist schematisch ein Zylinderrollenlager gemäß einem bevorzugten Ausführungsbeispiel der Erfindung dargestellt. Es umfasst einen Außenring 1 und einen Innenring 3, die über Zylinderrollen 5 drehbar gegeneinander gelagert sind. Radial umlaufend ist eine Vielzahl von Zylinderrollen 5 angeordnet. Die Zylinderrollen 5 werden mittels eines Käfigs 7 beabstandet gehalten. In alternativen Ausführungsformen der Erfindung können ebenfalls vollrollige Lager, die also die maximale Rollenanzahl und daher keinen Käfig aufweisen mit dem erfindungsgemäßen Bordprofil gefertigt werden.

Zur Führung der Zylinderrollen 5 weist der Außenring 1 axial endseitig ausgebildete Borde 9 und 11 auf. Die Borde 9 und 11 dienen jeweils als Anlauffläche für die axial benachbarte Stirnseite 25 der Zylinderrollen 5 und stellen somit eine Führung für die Zylinderrollen 5 bereit. Der Innenring 3 weist einen Bord 13 auf, der wie die Borde 9 und 11 eine Anlauffläche 27 für die Zylinderrollen 5 bereitstellt und zur Führung der Zylinderrollen 5 beiträgt. Die Profile des Bords 13, bevorzugt oder alternativ auch der Borde 9 und 11 sind gemäß einer bevorzugten Ausführungsform der Erfindung ausgebildet und anhand der nachfolgenden Figuren detailliert erläutert. Bevorzugt weisen die Zylinderrollen 5 weisen im Bereich der Borde 9, 11 und 13 Abschnitte der Stirnseiten 25 auf, die das Anlaufverhalten und die Führung der Zylinderrollen gemäß der Erfindung verbessern. Die Abschnitte der Stirnseite 25 gehen radial außen und innen in eine Kantenkürzung 21 über, die eine Verrundung der Kanten der Zylinderrollen 5 darstellt.

In der Figur 1 sind zur Veranschaulichung der Erfindung mehrere Dimensionen der Zylinderrollen 5 dargestellt. Es bezeichnen dabei:

$D_w$ den Durchmesser der Zylinderrolle 5,

$r_w$ die Kantenkürzung 21 und

$L_{eff}$ den effektiven Stirnseitenradius der Zylinderrolle 5: $L_{eff} = 0{,}5 \cdot D_w - r_w$

Durch die entsprechend dem bevorzugten Verlauf ausgebildete Krümmung des Bordes 13 bzw. der Borde 9 und 11 ergibt sich eine besonders vorteilhafte Führung der Zylinderrollen 5. Insbesondere werden durch die definierte Berührung der Zylinderrolle 5 und des Bords 13 Kontaktspannungen minimiert und gleichzeitig der Berührpunkt so nah wie möglich an der Laufbahn gehalten. Kommt es zu einem Schränken (also einer Schrägstellung bezüglich einer senkrecht zur Laufbahn stehenden Achse) oder einem Kippen (also einer Schrägstellung bezüglich einer tangential zur Laufbahn verlaufenden Achse) der Rolle, so entfernt sich der Berührpunkt zwischen der Zylinderrolle 5 und dem Bord 13 von der Laufbahn. Gleichzeitig zeichnet sich die Zylinderrolle 5 durch ein besonders geringes Reibmoment am Bord auf.

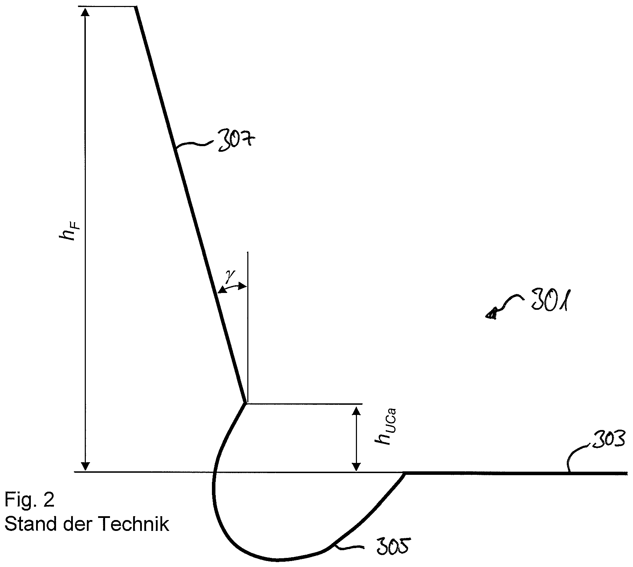

In der Figur 2 ist ausschnittsweise ein bekanntes Laufbahnelement 301 dargestellt. Es weist eine sich axial erstreckende Laufbahn 303 auf, auf der beispielsweise Zylinderrollen zum Abrollen vorgesehen sind. In axialer Richtung schließt sich an die Laufbahn 303 ein axial und radial ausgedehnter Einstich 305 an. Am gegenüber liegenden Ende des Einstichs 305 schließt sich ein Bord 307 an, der sich linear unter einem Winkel $\gamma$ schräg nach außen im Wesentlich in radialer Richtung erstreckt. Der Bord 307 stellt eine Anlauffläche für die Stirnseite der Zylinderrollen dar. $h_F$ bezeichnet dabei die radiale Höhe des Bords 307. Der Hinterstich 305 beginnt in Bezug auf die radiale Richtung in einer Höhe $h_{UCa}$ oberhalb der Laufbahn 303.

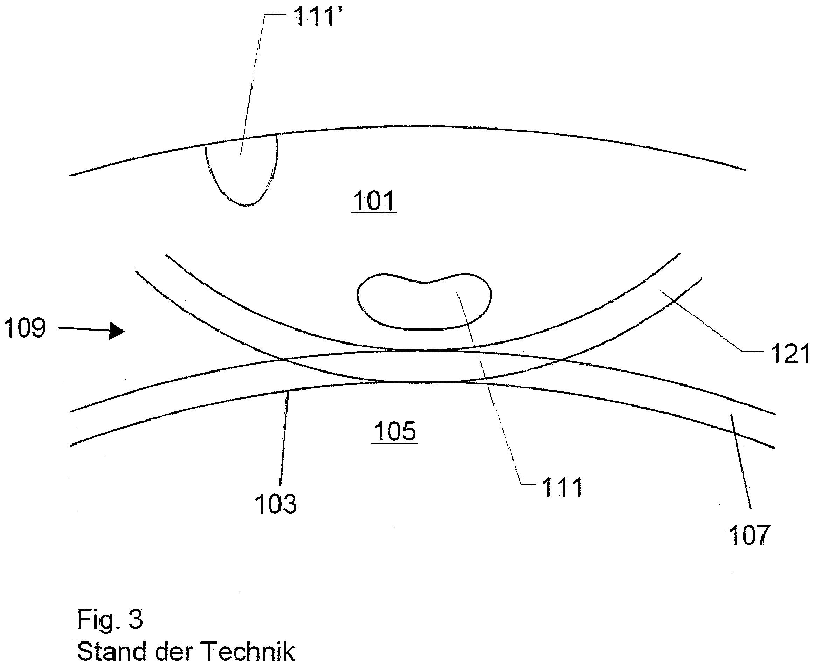

In Figur 3 ist ausschnittsweise in schematischer Darstellung eine bekannte Zylinderrolle 101 dargestellt, die auf einer Laufbahn 103 des Innenrings 105 eines Zylinderrollenlagers abrollt. Die Zylinderrolle 101 weist radial außen liegend einen Bereich einer Kantenkürzung 121 auf. Entsprechend ist am Innenring 105 ein Einstich 107 vorgesehen. Zur Führung der Zylinderrolle 101 weist der Innenring 105 einen Bord 109 auf, der hier quasi transparent dargestellt ist, um die Rolle 101 sichtbar zu machen. Die Rolle 101 liegt am Bord 109 in einer Kontaktzone in einem Bereich 111 an. Kommt es zu einem Schränken oder Kippen der Zylinderrolle 101, so wandert die Kontaktzone je nach Ausprägung nach außen zum Rand der Bords 109, so dass sie beispielsweise im Bereich 111' liegt.

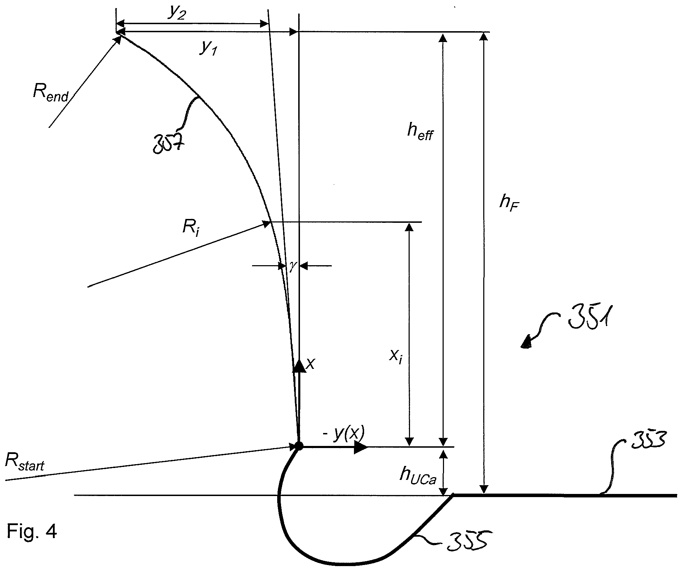

In der Figur 4 ist als ein Ausführungsbeispiel der Erfindung in Anlehnung an die Darstellung der Figur 2 ausschnittsweise und schematisch ein Laufbahnelement 351 dargestellt. An eine Laufbahn 353 schließt sich wiederum ein Einstich 355 an. An den Einstich 355 schließt sich ein Bord 357 an, der im Unterschied zur bekannten Ausführung der Figur 2 in dem dargestellten Abschnitt gekrümmt ausgeführt ist. Die Krümmung $\kappa_i$ (mit $\kappa_i = 1/R_i$, wobei $R_i$ der lokale Radius des Bords 357 an der jeweiligen Stelle ist) ändert sich kontinuierlich mit zunehmendem Abstand von der Lauffläche 353. Beispielhaft sind neben einem beliebig gewählten $R_i$ noch die Radien $R_{start}$ im Startpunkt des Abschnitts und $R_{end}$ im Ende des Abschnitts dargestellt. Zur nachfolgenden Beschreibung des Verlaufs des Abschnitts ist im Startpunkt des Abschnitts ein Koordinatenursprung dargestellt, wobei in Bezug auf diesen die radiale Richtung mit $x$ und die axiale Richtung mit $y$ unter Nichtberücksichtigung von Bezugsrichtungen bezeichnet ist.

Es gilt vorzugsweise:

$$R_{start} > R_i > R_{end} \, ,$$

was in der Figur 4 angedeutet ist. Folglich ist die Krümmung $\kappa_{start}$ im Startpunkt kleiner als $\kappa_{end}$ im Endpunkt, vorzugsweise sogar deutlich kleiner. Im Vergleich zu den Abmessungen des dargestellten Einstichs ist der Verlauf des Abschnitts in $y$-Richtung deutlich übertrieben groß dargestellt. Im tatsächlichen Laufbahnelement wird die Ausdehnung in $y$-Richtung im Bereich weniger μm liegen, während der Einstich je nach Größe des Lagers Abmessungen im Bereich von mm aufweisen kann.

Der Bord 357 setzt in einer Höhe von $h_{UCa}$ oberhalb der Lauffläche 353 an. Diese sollte so klein wie fertigungstechnische möglich gehalten werden, um die bestmöglichen Eigenschaften bei der Rollenführung zu erhalten. Zumindest sollte sie jedoch kleiner sein als die Kantenkürzung der zu führenden Rolle.

Der Abschnitt des Bords 357 folgt einem Verlauf

$$y(x) = -\gamma \cdot x - y_2 \cdot \left(\frac{x}{h_{eff}}\right)^m,$$

wobei $x$ der radiale Abstand vom Profilstartpunkt ist. Bevorzugt liegt die Konstante $m$ zwischen 3 und 8. Der Winkel $\gamma$ liegt bevorzugt zwischen 0 und 3 mrad und stellt eine Verkippung einer Tangente an $y(x)$ im Startpunkt des Abschnitts bezüglich der $x$-Richtung dar. Die Konstante $y_2$ ergibt sich aus $y_2 = y_1 - \gamma h_{eff}$. Die Konstante $y_1$ liegt zwischen $0{,}003 \cdot h_{eff}$ und $0{,}02 \cdot h_{eff}$. Dabei bezeichnet $h_{eff}$ die effektive Bordhöhe, die sich aus der Differenz der Bordhöhe ab der Laufbahn $h_F$ und der Einstichhöhe $h_{UCa}$ ergibt. Es gilt also: $h_{eff} = h_F - h_{UCa}$. Aus dem Verlauf $y(x)$ lässt sich die jeweilige Krümmung durch zweifache Ableitung nach $x$ bestimmen.

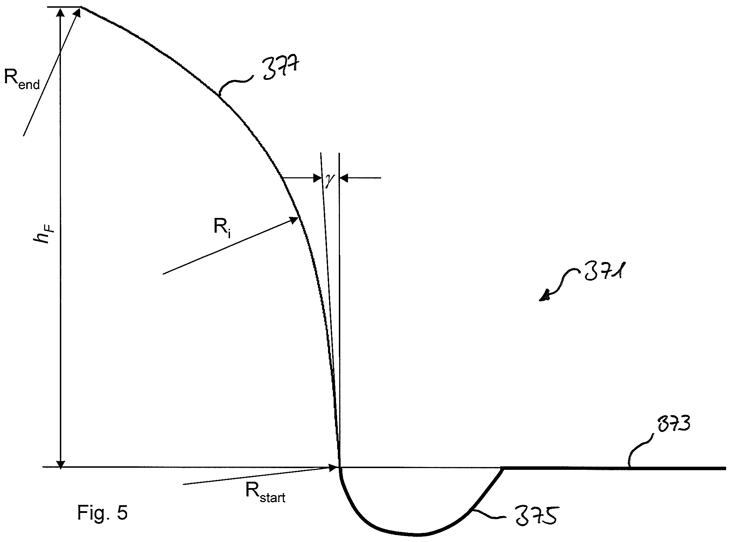

In der Figur 5 ist ein weiteres Ausführungsbeispiel der Erfindung dargestellt. Bei dem Laufbahnelement 371 schließt sich der Bord 377 auf Höhe der Laufbahn 373 an den Einstich 375 an. Der Bord 377 ist daher axial nicht hinterstochen, so dass unabhängig von der Lage der zu führenden Rolle im Lager diese stets am optimierten Teil des Bords 377 geführt wird. Schon bei kleinsten Auslenkungen der Rolle erfährt diese durch den Bord 377 (ggf. im Zusammenspiel mit der optimierten Stirnseite der Rolle) eine Rückstellkraft, so dass größeren Auslenkungen entgegen gewirkt wird. Ansonsten ist der gekrümmte Abschnitt des Bords 377 analog zu dem Ausführungsbeispiel der Figur 4 ausgeführt.

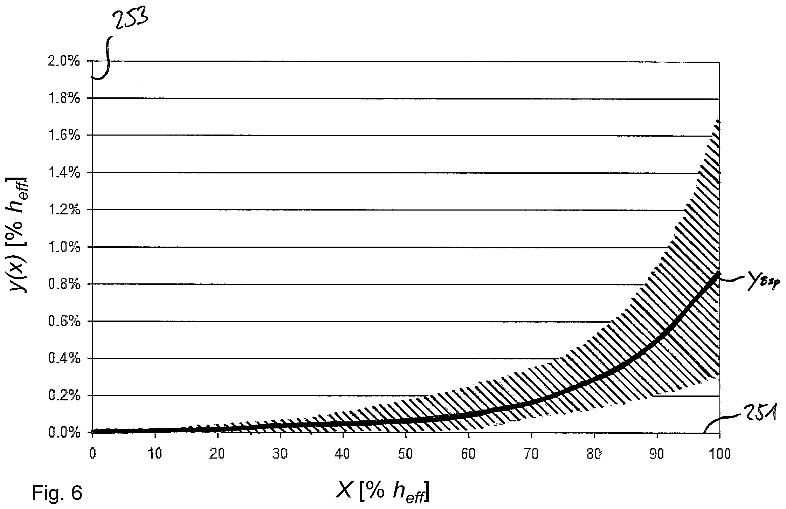

Beispielhaft ist ein Verlauf $y_{Bsp}$ in der Figur 6 dargestellt. Auf der horizontalen Achse 251 ist der Abstand $x$ in Bezug auf $h_{eff}$ aufgetragen. Auf der vertikalen Achse 253 ist $y(x)$ in Bezug auf $h_{eff}$ aufgetragen. Zudem ist ein schraffierter Bereich um den Beispielverlauf dargestellt, in dem Verläufe von Bordabschnitten liegen können, die ebenfalls die vorteilhaften Eigenschaften der Erfindung aufweisen. Es wird deutlich, dass insbesondere für kleine Werte von $y(x)$ die vorteilhaften Eigenschaften bereits bei geringen Abweichungen vom Beispielverlauf stark nachlassen bzw. nicht mehr vorhanden sind, während dies bei größeren Werten von $y(x)$, also bei größerem Abstand von der Laufbahn nicht mehr so stark ins Gewicht fällt.

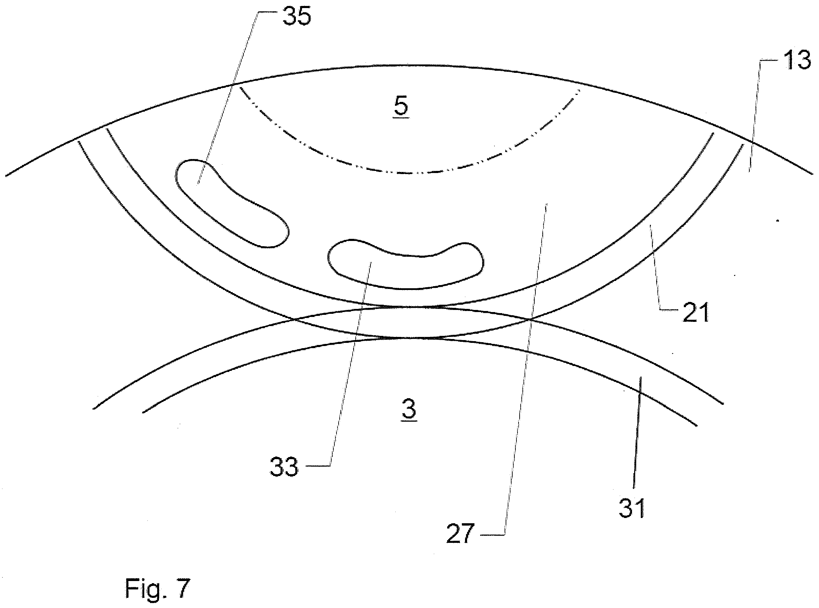

In der Figur 7 ist in analoger Darstellung zur Figur 3 eine Ausführungsform der Erfindung dargestellt. Die Kantenkürzung 21 der Zylinderrolle 5 liegt im Bereich eines Einstichs 31 des Innenrings 3. Der Abschnitt 27 der Stirnfläche wird am Bord 13 geführt. Bei geradem Lauf der Zylinderrolle 5 liegt diese in einer Kontaktzone im Bereich 33 am Bord 13 an. Aufgrund der optimierten Ausführung des Abschnitts 27 und der Anlauffläche des Bords 13 wandert die Kontaktzone bei vergleichbaren Betriebsbedingungen des Zylinderrollenlagers jedoch nicht soweit nach außen wie bei bekannten Ausführungen (vgl. Figur 3). Bei Schränken oder Verkippen der Zylinderrolle 5 entsteht durch die Wechselwirkung des Abschnitts 27 mit dem Bord 13 ein Rückstellmoment auf die Zylinderrolle 5. Die Kontaktzone zum Bord 13 verändert daher ihre Lage nur vergleichweise gering und liegt in einem Bereich 35. Durch das verminderte Wandern der Kontaktzone beim Schränken oder Kippen wird das Reibmoment und die Ausfallwahrscheinlichkeit des Rolle-Bordkontakts minimiert und es lassen sich die erfindungsgemäßen Zylinderrollen 5 insbesondere in Wälzlagern mit geringer Bordhöhe einsetzen.

Selbst im Fall eines derart starken Schränkens oder Kippens der Zylinderrolle 5, dass die Kontaktzone zum äußeren Rand des Bords 13 wandert, werden durch das Profil 27 und die optimierte Anlauffläche des Bords 13 Kantenspannungen zwischen der Zylinderrolle 5 und dem Bord 13 minimiert, so dass die Fressneigung der Zylinderrolle 5 am Bord 13 verringert wird. Die Zylinderrolle 5 wird durch den optimierten Abschnitt 27 definiert am Bord 13 geführt. Dies resultiert auch in einem geringeren Reibmoment. Bei Borden geringer Höhe oder geringem Öffnungswinkel, die sich also parallel zur radialen Richtung erstrecken, wird die Belastung der Zylinderrolle 5 minimiert.

Zylinderrollen und Borde gemäß dem hier beschriebenen Ausführungsbeispiel lassen sich beispielsweise durch Hartdrehen oder elektrochemische Metallbearbeitung erzeugen. Dabei werden die Profilierungen durch entsprechende Prozesse innerhalb enger Toleranzen gefertigt.

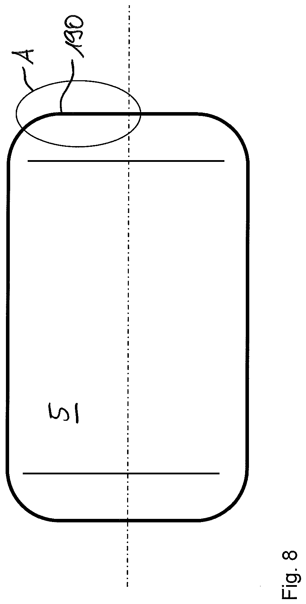

In der Figur 8 ist exemplarisch eine Zylinderrolle 5 gezeigt. Die Zylinderrolle 5 weist im Bereich A der Stirnseite 190 eine Profilierung auf, die im Zusammenspiel mit Bordprofilen gemäß Ausführungsbeispielen der Erfindung deren Effekte auf die Führung der Zylinderrolle 5 weiter verbessert. Die Stirnseite 190 der Zylinderrolle 5 ist im Bereich A gemäß einer Kurve

$$h(z) = h_1 \left(\frac{z}{L_{\text{eff}}}\right)^{K_1}$$

ausgebildet, wobei z der Abstand von der Rollenmitten-

achse, $h_1$ eine Konstante (Randabfall/Verblendung in axialer Richtung), $L_{eff}$ der effektive Stirnseitenradius der Rolle mit

$$L_{\text{eff}} = 0,5 \cdot D_w - r_w,$$

sowie $K_1$ eine Konstante, die den Verlauf des gekrümmten Bereichs beschreiben sind. $D_W$ ist dabei der Rollendurchmesser und $r_W$ die Kantenkürzung. Dadurch ergeben sich ähnliche positive Effekte auf die Führung der Zylinderrolle 5 wie durch die optimierte Ausbildung der Borde 9, 11 und 13. Bei gleichzeitiger Ausbildung der Anlaufflächen gemäß diesem Ausführungsbeispiel verstärken sich die genannten Effekte gegenseitig. Jedoch lassen sich auch in einem Rollenlager mit nicht optimierter Stirnseite der Zylinderrollen 5 die positiven Effekte der gekrümmten Bordfläche nutzen.

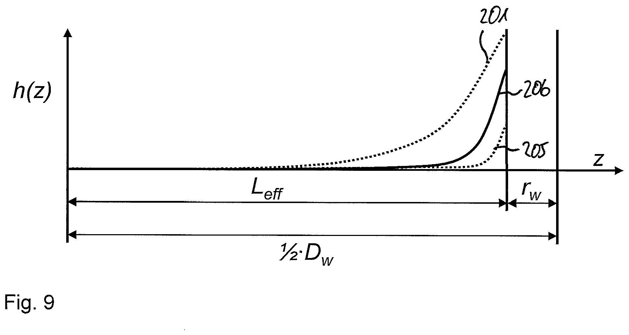

In der Figur 9 sind beispielhaft mehrere Profilverläufe im Bereich des Ausschnitts A aus der Figur 8 vergrößert dargestellt. Die drei dargestellten Verläufe basieren auf der oben erläuterten Formel $h(z)$ für das bevorzugte Stirnseitenprofil der Zylinderrolle 5. In horizontaler Richtung von links nach rechts erstreckt sich der Verlauf von $z$, wobei der Nullpunkt auf der Rollenachse der Zylinderrolle 5 liegt. $h(z)$ ist senkrecht dazu aufgetragen. Dabei sind zwei Einhüllende 201 und 205 gezeigt, die mit bevorzugten Extremwerten der Parameter $h_1$ und $K_1$ berechnet wurden. Für die Einhüllende 201 wurden die Parameter

$$h_1 = 0,05\% \cdot D_W \text{ und } K_1 = 20$$

und $K_1$ = 20 gewählt. Für die Einhüllende 205 wurden die Parameter

$$h_1 = 0,015\% \cdot D_W \text{ und } K_1 = 50$$

und $K_1$ = 50
gewählt.

Zwischen den Einhüllenden 201 und 205 ist eine weitere Kurve 206 gezeigt, die aus mittleren Werten der Parameter resultiert. Ausgehend von der Rollenachse steigt das Profil der Sitrnseite an und geht in den hier nicht dargestellten Bereich der Kantenkürzung $r_w$ über. Im Bereich des Profils liegt die Zylinderrolle 5 entsprechend am Bord des entsprechenden Laufbahnelements an. In der Darstellung ist der Maßstab in Richtung von $h(z)$ im Vergleich zu z deutlich vergrößert dargestellt, damit der Verlauf sichtbar ist.

Zusammenfassend lässt sich sagen, dass durch die Anlauffläche und die Rollen mit definiertem Stirnseitenprofil die Kontaktzone bei normalen Betriebsbedingungen des Lagers in einem niedrigen Bereich des Bords gehalten wird und auch bei stärkerem Kippen oder Schränken ein Rückstellmoment ohne Auftreten von Kantenspannungen entsteht.

## Bezugszeichenliste

| 1 | Außenring |
|---|---|
| 3 | Innenring |
| 5 | Zylinderrollen |
| 7 | Käfig |
| 9 | Bord |
| 11 | Bord |
| 13 | Bord |
| 21 | Kantenkürzung |
| 23 | Rollenmittelachse |
| 25 | Stirnseite |
| 27 | gekrümmter Abschnitt |

| 5 | Zylinderrolle |
|---|---|
| 3 | Innenring |
| 13 | Bord |
| 21 | Kantenkürzung |
| 27 | Abschnitt |
| 31 | Einstich |
| 33, 35 | Bereich |

| 101 | Zylinderrolle |
|---|---|
| 103 | Laufbahn 105 Innenrings |
| 107 | Einstich |
| 109 | Bord |
| 111, 111' | Bereich |
| 121 | Kantenkürzung |

| 190 | Stirnseite |
|---|---|
| 201, 205 | Einhüllende |
| 206 | Kurve |

| 251,253 | Achse |
|---|---|

| 301, 351, 371 | Laufbahnelement |
|---|---|
| 303, 353, 373 | Laufbahn |
| 305, 355, 375 | Einstich |
| 307, 357, 377 | Bord |

## Patentansprüche

1. Laufbahnelement für ein Rollenlager, wobei das Laufbahnelement (351) wenigstens eine im Wesentlichen radial verlaufende Anlauffläche für Rollen des Rollenlagers aufweist, wobei wenigstens ein Abschnitt (27) der Anlauffläche gemäß einer gekrümmten Kurve ausgebildet ist,
**dadurch gekennzeichnet, dass**
sich die Krümmung $\kappa_j$ der Kurve kontinuierlich ändert und $\kappa_j$ mit zunehmendem Abstand von einer Laufbahn (353) des Laufbahnelements (351) kontinuierlich ansteigt, wobei der Abschnitt unmittelbar im Anschluss an einen radialen Einstich (355) des Laufbahnelements (351) beginnt.

2. Laufbahnelement nach Anspruch 1, wobei $\kappa_i$ mit zunehmendem Abstand von einer Laufbahn (353) des Laufbahnelements (351) stärker ansteigt.

3. Laufbahnelement nach einem der Ansprüche 1 oder 2, wobei der Abschnitt einem Verlauf folgt, mit

$$y(x) = -\gamma \cdot x - y_2 \cdot \left(\frac{x}{h_{eff}}\right)^m,$$

wobei

- $x$ der Abstand vom Startpunkt des Abschnitts (27) ist,
- $y$ und $m$ Konstanten sind,
- $h_{eff} = h_F - h_{UCa}$ ist und die effektive Höhe der Anlauffläche bezeichnet, die sich aus der Differenz der Höhe $h_F$ der Anlauffläche ab der Laufbahn (353) und bei vorhandenem Einstich (355) der Einstichhöhe $h_{UCa}$ ab der Laufbahn (353) ergibt, und
- $y_2 = y_1 - \gamma h_{eff}$ mit einer Konstante $y_1$ ist,

und sich der Verlauf von $\kappa_i$ aus der zweiten Ableitung von $y(x)$ nach $x$ ergibt, wobei

- $m$ zwischen 3 und 8,
- $\gamma$ zwischen 0 und 3 mrad und
- $\gamma_1$ liegt zwischen $0{,}003 \cdot h_{eff}$ und $0{,}02 \cdot h_{eff}$ liegt.

4. Rollenlager mit wenigstens einem Laufbahnelement (351) nach einem der Ansprüche 1 bis 3.

5. Rollenlager nach Anspruch 4, wobei Rollen vorgesehen sind, wobei wenigstens ein sich in einem vorgebbaren Abstand von der Rollenmittenachse bis hin zu einem Kantenkürzungsbereich erstreckender Anlaufabschnitt einer Stirnseite der Rolle gemäß einer gekrümmten Kurve (206) ausgebildet ist, die entsprechend dem Verlauf $h$ verlaufend ausgebildet ist, wobei

$$h(z) = h_1 \left(\frac{z}{L_{eff}}\right)^{K_1}$$

ist und wobei z der radiale Abstand von der Rollenmittenachse ist, $h_1$ eine Konstante (Randabfall/Verblendung) in axialer Richtung, $L_{eff}$ der effektive Stirnseitenradius der Rolle, sowie $K_1$ eine Konstante sind.

6. Rollenlager nach Anspruch 5, wobei

$$L_{eff} = 0{,}5 \cdot D_w - r_w,$$

wobei $D_W$ der Rollendurchmesser und $r_W$ die Kantenkürzung ist

7. Rollenlager nach Anspruch 6, wobei $h_1$ im Bereich von 0,015% bis 0,05% des Rollendurchmessers $D_W$ liegt.

8. Rollenlager nach Anspruch 6 oder 7, wobei und $K_1$ im Bereich [20...50] liegt.

**Claims**

1. Track element for a roller bearing, the track element (351) having at least one substantially radially extending thrust surface for rollers of the roller bearing, at least one section (27) of the thrust surface being formed in accordance with a curve,
**characterized in that**
the curvature $\kappa_i$ of the curve changes continuously and $\kappa_i$ rises continuously with increasing distance from a track (353) of the track element (351), wherein the section begins immediately after a radial groove (355) of the track element (351).

2. Track element according to Claim 1, wherein $\kappa_i$ rises more steeply with increasing distance from a track (353) of the track element (351).

3. Track element according to either of Claims 1 and 2, wherein the section follows a course with

$$y(x) = -y \cdot x - y_2 \cdot \left(\frac{x}{h_{eff}}\right)^m,$$

where

- $x$ is the distance from the starting point of the section (27),
- $y$ and $m$ are constants,
- $h_{eff} = h_F - h_{UCa}$ and designates the effective height of the thrust surface, which is given by the difference between the height $h_F$ of the thrust surface starting from the track (353) and, when there is a groove (355) present, the groove height $h_{UCa}$ beginning from the track (353), and

- $y_2 = y_1 - \gamma h_{eff}$ with a constant $y_1$,

and the course of $\kappa_i$ is given by the second derivative of $y(x)$ with respect to $x$,

where

- $m$ is between 3 and 8,
- $\gamma$ is between 0 and 3 mrad and
- $y_1$ is between $0.003 \cdot h_{eff}$ and $0.02 \cdot h_{eff}$.

**4.** Roller bearing comprising at least one track element (351) according to one of Claims 1 to 3.

**5.** Roller bearing according to Claim 4, wherein rollers are provided, wherein at least one thrust section of one end of the roller, extending at a predefinable distance from the roller mid-axis as far as an edge shortening region, is formed in accordance with a curve (206), which is formed so as to extend in accordance with the course $h$, wherein

$$h(z) = h_1 \left( \frac{z}{L_{eff}} \right)^{\kappa_1}$$

And wherein z is the radial distance from the roller mid-axis, $h_1$ is a constant (edge taper/facing) in the axial direction, $L_{eff}$ is the effective end radius of the roller, and $K_1$ is a constant.

**6.** Roller bearing according to Claim 5, wherein

$$L_{eff} = 0.5 \cdot D_W - r_W \, ,$$

where $D_W$ is the roller diameter and $r_W$ is the edge shortening.

**7.** Roller bearing according to Claim 6, wherein $h_1$ lies in the range from 0.015% to 0.05% of the roller diameter $D_W$.

**8.** Roller bearing according to Claim 6 or 7, wherein and $K_1$ lies in the range [20...50].

**Revendications**

**1.** Elément de voie de roulement pour un palier à rouleaux, dans lequel l'élément de voie de roulement (351) présente au moins une face de butée s'étendant essentiellement radialement pour des rouleaux du palier à rouleaux, dans lequel au moins une section (27) de la face de butée est réalisée suivant une courbe incurvée, **caractérisé en ce que** la courbure $K_i$ de la courbe varie de façon continue et $K_i$ augmente de façon continue avec l'augmentation de la distance d'une voie de roulement (353) de l'élément de voie de roulement (351), dans lequel la section commence immédiatement à la suite d'une encoche radiale (355) de l'élément de voie de roulement (351).

**2.** Elément de voie de roulement selon la revendication 1, dans lequel $K_i$ augmente plus fortement avec l'augmentation de la distance d'une voie de roulement (353) de l'élément de voie de roulement (351).

**3.** Elément de voie de roulement selon une des revendications 1 ou 2, dans lequel la section suit une allure, avec

$$y(x) = -\gamma \cdot x - y_2 \cdot \left( \frac{x}{h_{eff}} \right)^m \, ,$$

dans laquelle

- x est la distance du point de départ de la section (27),
- $\gamma$ et m sont des constantes,
- $h_{eff} = h_F - h_{UCa}$ et désigne la hauteur effective, qui résulte de la différence de la hauteur $h_F$ de la face de butée à partir de la voie de roulement (353) et, s'il y une encoche (355), de la hauteur d'encoche $h_{UCa}$ à partir de la voie de roulement (353), et
- $y_2 = y_1 - \gamma \cdot h_{eff}$ avec une constante $y_1$,

et l'allure de $K_i$ résulte de la dérivée seconde de $y(x)$ par rapport à x, dans laquelle

- m est compris entre 3 et 8,
- $\gamma$ est compris entre 0 et 3 mrad, et
- $y_1$ se situe entre $0{,}003 \cdot h_{eff}$ et $0{,}02 \cdot h_{eff}$.

**4.** Palier à rouleaux avec au moins un élément de voie de roulement (351) selon l'une quelconque des revendications 1 à 3.

**5.** Palier à rouleaux selon la revendication 4, dans lequel il est prévu des rouleaux, dans lequel au moins une partie de butée d'un côté frontal du rouleau, qui s'étend à une distance prévisible de l'axe central du rouleau jusqu'à une zone de réduction d'arête, est réalisée suivant une courbe (206) incurvée, qui est réalisée avec un tracé correspondant à l'allure h, dans lequel on a

$$h(z) = h_1 \left( \frac{z}{L_{eff}} \right)^{K_1} \, ,$$

et dans lequel z est la distance radiale de l'axe central du rouleau, $h_1$ est une constante (chute du bord/parement) en direction axiale, $L_{eff}$ est le rayon effectif du côté frontal du rouleau, et $K_1$ est également une constante.

**6.** Palier à rouleaux selon la revendication 5, dans lequel on a

$$L_{eff} = 0{,}5 \cdot D_w - r_w \,,$$

dans laquelle $D_w$ est le diamètre de rouleau et $r_w$ est la réduction d'arête.

**7.** Palier à rouleaux selon la revendication 6, dans lequel $h_1$ se situe dans la plage de 0,015 % à 0,05 % du diamètre de rouleau $D_w$.

**8.** Palier à rouleaux selon la revendication 6 ou 7, dans lequel et $K_1$ se situe dans la plage [20 ... 50].

Fig. 1

Fig. 2
Stand der Technik

Fig. 3
Stand der Technik

EP 2 884 126 B1

Fig. 4

Fig. 5

Fig. 6

Fig. 7

EP 2 884 126 B1

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005061102 A1
- JP 2003120687 A
- DE 102008020068 A1